# EUROPEAN PATENT APPLICATION

(11) **EP 0 750 190 A1**
(43) Date of publication of application: **27.12.1996**
(21) Application number: 95941904.5
(22) Date of filing: 26.12.1995
(51) Int. Cl.: G01N 30/60

(54) **POROUS CHANNEL CHROMATOGRAPHY DEVICE**

(30) Priority: 26.12.1994 JP 336637/94
(71) Applicant: KABUSHIKI KAISYA ADVANCE, Chuo-ku Tokyo 103 (JP)
(72) Inventor: MASUDA, Senichi, / (JP); WASHIZU, Masao, Tokyo 166 (JP); KUROSAWA, Osamu, Mitaka-shi, Tokyo 181 (JP)
(74) Representative: Santarelli, Marc
(86) International application number: JP9502703
(87) International publication number: WO9620401

(57) **Abstract**

An apparatus for chromatography using a carrier, by using a porous channel formed on a substrate by electrolytic etching as a separation tube, it is intended to miniaturize the separation tube so that the entire apparatus may be made miniaturized and the required sample amount may be minimized.

## Description

### TECHNICAL FIELD

The present invention relates to an apparatus for porous channel chromatography apparatus.

### BACKGROUND ART

In a conventional apparatus for liquid chromatography using a carrier, a molecular solution is passed through a stainless steel tube (i.e., separation tube) filled with/a carrier such as Sephadex, and the separation and the analysis of each component are effected based on the difference in retention times thereof. In such an apparatus, however, when a separation tube is intended to be made small to minimize the required sample amount, it is difficult to fill it with carrier powder. Particularly, if a lithography technique is used, a tube having a diameter of around 0.1 mm is relatively easily produced. However, it is almost impossible to uniformly fill a carrier in this tube after producing the same. This has been the most serious problem in miniaturizing the size of the separation tube.

### DISCLOSURE OF THE INVENTION

Accordingly, the object of the present invention is to eliminate the above-mentioned problem in the art and to provide an apparatus for chromatography having a micro-separation tube as a separation column so that the apparatus can be made small, the required sample amount can be minimized, and a high sensitivity can be obtained.

In accordance with the present invention, there is provided an apparatus for chromatography characterized in that a channel comprising a porous material is formed on a substrate and the channel is utilized as a separation column.

### BRIEF EXPLANATION OF THE DRAWINGS

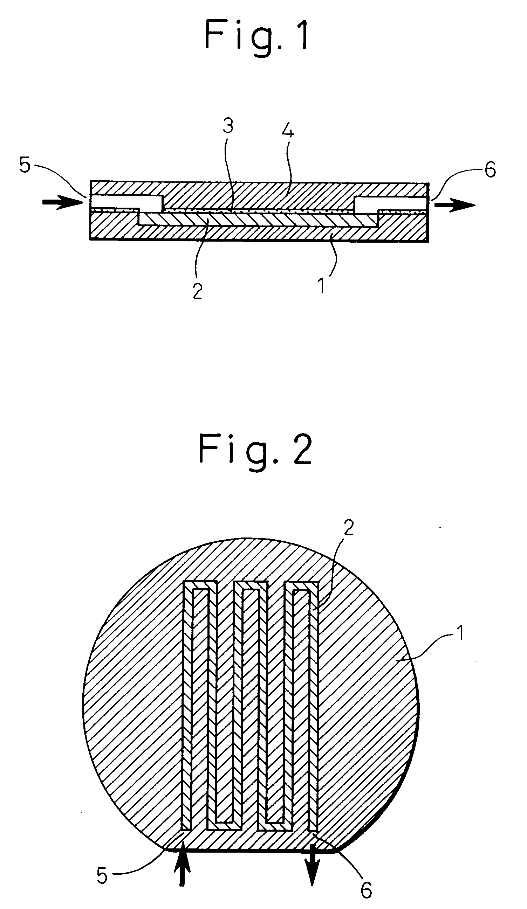

The present invention will be explained in further detail with reference to the drawings. In the attached drawings, Fig. 1 is a sectional view showing an example of an apparatus for porous channel chromatography, and Fig. 2 is a plan view of an example of a pattern for a separation tube of the apparatus for a porous channel chromatography apparatus.

### BEST MODE FOR CARRYING OUT THE INVENTION

In the apparatus for chromatography according to the present invention, carrier powder is not filled after producing a separation tube, but a channel comprising a porous material is formed on a substrate, which is used as a separation tube (or column). Accordingly, an apparatus for chromatography having a micro-separation column can be realized, so that it becomes possible to reduce the size of the entire apparatus, to minimize the required sample amount and increase the sensitivity.

### EXAMPLE

Examples of the present invention will be illustrated in detail by referring to, but is by no means limited to, Figs. 1 and 2.

Fig. 1 shows a sectional view of one example of the present invention. For example, on a silicone substrate 1, a porous channel 2 is formed by means of electrolytic etching. As a method of forming a porous channel, according to an ordinary method, for example, a method comprising coating a resist on a silicone substrate 1, then removing the resist at a portion where a channel is to be formed by means of a lithography technique, and thereafter, etching the silicone substrate 1, while applying a voltage thereto while entirely immersed in an aqueous hydrofluoric acid solution (i.e., electrolytic etching).

It should be noted, however, that, instead of the silicone substrate, substrates such as metallic substrates, for example, aluminum also can be used.

On the upper surface of the silicone substrate 1 having the porous channel 2 formed thereon as mentioned above, an adhesive layer 3 (e.g., a silicone rubber adhesive) is coated for sealing, then a cover 4 such as a glass plate is adhered thereon. When a sample solution is introduced from an inlet 5 of the apparatus for chromatography having such a construction in the direction shown by the arrow, porous layer 2 functions as a separation carrier so that the components of the sample solution flows out from an outlet 6 after staying for a time therein corresponding to the molecular weights thereof in the direction shown by the arrow. Thus, the chromatography apparatus according to the present invention can be provided with a valve, ramifying and mixing unit, etc. as in a conventional apparatus for chromatography. If a detector is further provided on the outlet side, the apparatus can be used as an analyzer. On the other hand, if a sample flowing out as determined by its retention time is dispensed, it can be used as a separation apparatus.

Fig. 2 shows an example of a separation tube pattern of an apparatus for porous channel chromatography according to the present invention. As shown in Fig. 2, by turning a channel pattern or making the same in the spiral form, a long separation tube 8 can be formed on one piece of a substrate 7. This separation tube 8 is not produced by filling powder therein, but is produced at once by etching. Thus, the filling of a carrier does not become difficult due to the long length of the separation tube 8. In Fig. 2, numbers 9 and 10 show the inlet and outlet of a sample solution flowing in the direction shown by the arrows.

As mentioned hereinabove, according to the present invention, since a porous channel is directly formed on a substrate, which is used as a separation tube, a micro-separation tube can be readily produced so that an entire apparatus for chromatography can be miniaturized, a required sample amount can be minimized and the apparatus can be highly sensitive.

### List of Reference Numbers

- 1: Substrate
- 2: Porous channel
- 3: Adhesive layer
- 4: Cover
- 5: Inlet
- 6: Outlet

## Claims

1. An apparatus for chromatography comprising a channel comprising a porous material formed on a substrate as a separation column.

2. An apparatus for chromatography as claimed in claim 1, wherein the porous channel is formed by etching.

3. An apparatus for chromatography as claimed in claim 1, wherein the porous channel is produced by means of a lithography technique.

4. An apparatus for chromatography as claimed in claim 1, wherein a silicone substrate is used as the substrate and the porous channel is produced by electrolytic etching.

5. An apparatus for chromatography as claimed in claim 1, wherein a separation column, a detector, a valve other devices and are integrated on the substrate.

6. An apparatus for chromatography as claimed in claim 1, wherein a material causing an electrolytic etching only with light irradiation is used as the substrate and a porous channel pattern is formed by irradiation of an optical pattern.
